**Europäisches Patentamt**

**European Patent Office**

**Office européen des brevets**

(19)

(11) Veröffentlichungsnummer: **0 198 228**
**A2**

# (12) EUROPÄISCHE PATENTANMELDUNG

(21) Anmeldenummer: **86103396.7**

(22) Anmeldetag: **13.03.86**

(51) Int. Cl.⁴: **B 65 G 47/29**

(30) Priorität: **15.04.85 DE 3513467**

(43) Veröffentlichungstag der Anmeldung: **22.10.86**
**Patentblatt 86/43**

(84) Benannte Vertragsstaaten: **AT BE CH DE FR GB IT LI LU NL SE**

(71) Anmelder: **Interroll Fördertechnik GmbH & Co. KG, Postfach, D-5632 Wermelskirchen 2 (DE)**

(72) Erfinder: **vom Stein, Hans, Neuenweg 63, D-5632 Wermelskirchen 3 (DE)**

(74) Vertreter: **Otto, Dieter, Dr.-Ing. et al, Patentanwälte Müller-Boré, Deufel, Schön, Hertel Lewald, Otto Isartorplatz 6 Postfach 26 02 47, D-8000 München 26 (DE)**

(54) Vorrichtung zur akkumulierenden Förderung von Gütern.

(57) Der Vorrichtung zur akkumulierenden Förderung von Gütern, bestehend aus einer Rollenbahn, ist ein Antrieb zugeordnet, der abschnittsweise durch Antrieb eines Förderabschnitt zugeordneten Bahnabschnitts die Güter fördert. Dazu ist ein Band (80) vorgesehen, welches als endloses Band ausgeführt ist und über Umlenkrollen am Anfang und Ende der Rollenbahn geführt ist. Jedem Förderabschnitt ist eine Hebevorrichtung (110) zugeordnet, die aus einem Profilabschnitt (116) besteht, an welchem das Obertrum (132) des Bandes (80) gegen die Unterseite der Rollen (82) drückende Rollen, wenn die Hebevorrichtung (110) angehoben ist, angeordnet sind. Zum Anheben des Profilabschnittes (116) sind in einem U-Profil (102) Gleitrampen (112 und 114) und an der Unterseite des Profilabschnittes (116) Gleitstücke (118 und 120) befestigt. Die Verschiebung des Profilabschnittes (116) erfolgt über eine Kolben-Zylinder-Einheit (134), die pneumatisch betätigt wird. Während des Verschiebens erfolgt ein Aufgleiten der Gleitstücke (118 und 120) auf die Gleitrampen (112 und 114), wobei der Profilabschnitt (116) und damit die Rollen (128 und 130) angehoben werden. Beim Absenken erfolgt eine Verschiebung des Profilabschnittes in entgegengesetzter Richtung, wobei eine Bremse (160) gegen eine Rolle (82) gebracht wird. Dieser Antrieb kann an einer Rollenbahn mit durchgehenden Rollen auch nachträglich eingebaut werden. Außerdem ermöglicht er einen reversiblen Betrieb der Rollenbahn.

Die Erfindung betrifft eine Vorrichtung zur akkumulierenden Förderung von Gütern, mit einer Rollenbahn und mit einem abschnittsweise die zu fördernden Güter fortbewegenden Antrieb, wobei der Antrieb im Bereich der Rollenbahn angeordnet ist, wobei für den Antrieb ein an den Enden der Rollenbahn umgelenktes endloses, über ein Antriebsaggregat angetriebenes Band vorgesehen ist, wobei das Obertrum des Bandes in der Nicht-Förderstellung in nahem Abstand zu der Unterseite der Rollen angeordnet ist, wobei für jeden Förderabschnitt ein Profilabschnitt mit das Obertrum des Bandes tragenden Rollen vorgesehen ist, und wobei jeder Profilabschnitt mit einer unabhängigen Hebevorrichtung vorgesehen ist.

Es ist bekannt, derartige Rollenbahnen mit geteilten Rollen auszubilden, wobei das U-Profil in der Mitte der Bahn angeordnet ist und jeweils ein Ende einer Rolle zweier nebeneinander angeordneter Rollen abstützt. Der Antrieb der zu fördernden Güter erfolgt über eine endlose, über die ganze Länge der Rollenbahn umlaufende Kette, welche an der Unterseite der Güter, die in Kisten oder auf Paletten angeordnet sind, angreift. Zur Schaltung der Förderabschnitte sind Schaltfahnen im Bereich der Rollenbahn angeordnet, die über die Rollen hervorstehen und beispielsweise durch die Kisten oder Paletten umgelegt werden, um über Ventile die Schaltbefehle auszuführen. Derartige Schaltfahnen können während des Betriebs leicht beschädigt werden, so daß dann mit einem Stillstand der Fördereinrichtung zu rechnen ist. Darüberhinaus ist bei den gekannten Vorrichtungen kein Abbremsen der Rollen möglich, so daß ein gewisses Nachlaufen der geförderten Güter eintritt. Außerdem sind die bekannten Antriebe nicht geeignet, in bestehende Rollenbahnen eingebaut zu werden und ebenfalls ist mit den bekannten Anordnungen kein reversibler Betrieb der Rollenbahn möglich.

Der Erfindung liegt die Aufgabe zugrunde, einen Antrieb für eine gattungsgemäße Rollenbahn zu schaffen, wobei insbesondere durchgehende Rollen, eine Nachrüstung und ein reversibler Betrieb möglich sind.

Diese Aufgabe wird erfindungsgemäß dadurch gelöst, daß für jede Hebevorrichtung an dem Profil Gleitrampen an der Unterseite jedes Profilabschnitts Gleitrampen und an der Unterseite jedes Profilabschnitts Gleitstücke zum Aufgleiten auf die Gleitrampen vorgesehen sind, und daß zum Verschieben jedes Profilabschnittes eine Kolben-Zylinder-Einheit angeordnet ist.

Die Förderkraft für die auf Leerlaufrollen zu transportierenden Güter wird nicht über eine Kette erbracht, sondern die Rollen der erfindungsgemäßen Vorrichtung werden über das Band angetrieben, so daß die Förderkraft über den Drehantrieb der Rollen auf die zu transportierenden Güter übertragen wird. Damit ist eine Teilung der Rollen nicht erforderlich, da das antreibende Band lediglich an der Unterseite der Rollen angreift, wenn der entsprechende Förderabschnitt aktiviert ist. Außerdem werden alle Rollen eines Förderabschnittes angetrieben. Da der Antrieb nicht oberhalb der Rollen erfolgt, kann der erfindungsgemäße Antrieb auch bei bestehenden Rollenbahnen eingebaut werden.

Gemäß einer bevorzugten Ausführungsform sind für jede Hebevorrichtung auf der Basis des U-Profils Gleitrampen und an der Unterseite jedes Profilabschnittes Gleitstücke zum Aufgleiten auf die Gleitrampen vorgesehen und zum Verschieben jedes Profilabschnittes ist eine Kolben-Zylinder-Einheit angeordnet. Während der Aktivierung der Kolben-Zylinder-Einheit gleiten die Gleitstücke auf die Gleitrampen auf, wodurch die Profilabschnitte angehoben werden und das Obertrum des Bandes über die an den Profilabschnitten angeordneten Tragrollen an die Unterseite der Rollen der Rollenbahn gepreßt wird. Dadurch werden die Rollen mit mehr oder weniger Schlupf direkt angetrieben. Das Profil ist vorzugsweise als U-Profil ausgebildet.

Die Kolben-Zylinder-Einheit wird vorzugsweise pneumatisch betätigt, der Kolben ist durch Federkraft rückstellbar und der Zylinder ist an dem U-Profil und der Kolben an dem Profilabschnitt angelenkt. Vorzugsweise kann der Kolben dabei an einem Gleitstück angelenkt sein.

Bei Betätigung der Hebevorrichtung erfolgt eine Verschiebung des Profilabschnittes in Bahnrichtung entgegen oder in Richtung des umlaufenden Bandes und gleichzeitig ein Anheben des Profilabschnittes, um das Band an die Rollen zu pressen.

Damit die an dem Profilabschnitt angeordneten Rollen das umlaufende Band gleichmäßig an die Rollen pressen, d.h. damit jeder Profilabschnitt während des Anhebens seine parallele Lage zu der Unterseite der Rollen beibehält, ist vorzugsweise jedes Gleitstück an der zugehörigen Gleitrampe zwangsgeführt. Damit kann ein Verkanten oder Verschwenken des Profilabschnitts verhindert werden. Dadurch wird auch gewährleistet, daß eine oberhalb des Obertrums des Bandes an dem Profilabschnitt vorgesehene Bremse, die vorzugsweise an der neben einer Schaltrolle des Förderabschnitts angeordneten Rolle angreift, zuverlässig einwirken kann. Die Bremse besteht insbesondere aus einem Profil mit einer Oberfläche hoher Reibung, das über zwei Befestigungsschilder an dem Profilabschnitt befestigt ist.

In Weiterbildung der Erfindung sind im Inneren der Profilabschnitte Gleitprofile für das Untertrum des Bandes angeordnet. Insbesondere bei angehobenem Profilabschnitt kommt das Untertrum des Bandes mit diesen Gleitprofilen in Berührung.

Die Profilabschnitte, die verschoben und angehoben werden, sind vorzugsweise als U-Profile ausgebildet.

Gemäß einer bevorzugten Ausführungsform sind die das Band tragenden Rollen über Buchsen an den Profilabschnitten gelagert und die Außenseiten der Buchsen bilden Führungsflächen zur Führung der Profilabschnitte in dem durchgehenden U-Profil.

Die Gleitflächen der Gleitrampen und Gleitstücke sind vorzugsweise unter einem Winkel von 45° geneigt und die Gleitrampen, Gleitstücke und Gleitprofile bestehen aus Kunststoff, insbesondere aus Nylon.

Je nach dem Gewicht der zu fördernden Güter ist jeder Rolle der Rollenbahn eine Andruckrolle für das Band zugeordnet oder jeweils zwischen zwei benachbarten Rollen der Rollenbahn ist eine Rolle zum Andrücken des Bandes an dem Profilabschnitt angeordnet.

Zur Anhebung des Untertrums des umlaufenden Bandes ist vorzugsweise neben jeder Umlenkrolle an den Enden der Rollenbahn eine Umlenkrolle unter dem Untertrum vorgesehen. Zur Einstellung einer erforderlichen Spannung in dem endlosen Band ist vorzugsweise mindestens eine Umlenkrolle am Ende der Rollenbahn verstellbar.

Gemäß einer bevorzugten Ausführungsform ist die in Förderrichtung jeweils vorderste Rolle jedes Schaltabschnittes als Schaltrolle ausgebildet. Durch diese Ausbildung sind zwischen den Rollen vorstehende Schaltfahnen nicht erforderlich.

Die Schaltrolle ist gemäß einer bevorzugten Ausführungsform an einem Ende im Rahmen der Rollenbahn und am gegenüberliegenden Ende in einem am Rahmen der Rollenbahn angelenkten Hebel gelagert und der Hebel wirkt direkt oder indirekt auf ein Steuerventil ein. Der Hebel ist dabei vorzugsweise an der Achse einer der Schaltrolle benachbarten Rolle angelenkt. Zur Rückstellung der Rolle in die schräge Ausgangsstellung wird das Schaltventil dadurch unterstützt, daß an dem Hebel eine am Rahmen der Rollenbahn befestigte Zugfeder angreift. Wenn ein zu transportierendes Gut über die Schaltrolle läuft, so wird diese Rolle soweit abgesenkt, bis ihre Oberfläche in der Fläche liegt, in welcher die Berührungslinien der anderen Rollen der Rollenbahn verlaufen. Der Weg der Schaltrolle wird begrenzt durch einen am Rahmen angeordneten Zapfen, auf welchen der Hebel aufsitzt.

Wenn in weiterer Ausgestaltung der Erfindung für jeden Förderabschnitt je eine Schaltrolle an den Enden und zwei Bremsen für bremsbare Rolle an den Profilabschnitt angeordnet sind, sowie die Bewegungsrichtung des Bandes umkehrbar ist, so kann die Förderanlage für reversiblen Betrieb eingerichtet werden.

Ausführungsbeispiele der Erfindung werden anhand der Zeichnung näher erläutert. Es zeigen:

Fig. 1    eine Schemaskizze eines akkumulierenden Förderers bei freiem Lauf des Gutes,

Fig. 2    den Förderer nach Fig. 1 mit sich aufstauendem Gut,

Fig. 3    eine schematische Darstellung eines Förderers in Seitenansicht,

Fig. 4    eine Draufsicht auf den Förderer nach Fig. 3,

Fig. 5    eine Seitenansicht einer Hebevorrichtung und

Fig. 6    eine Schaltrolle mit einem Schaltventil.

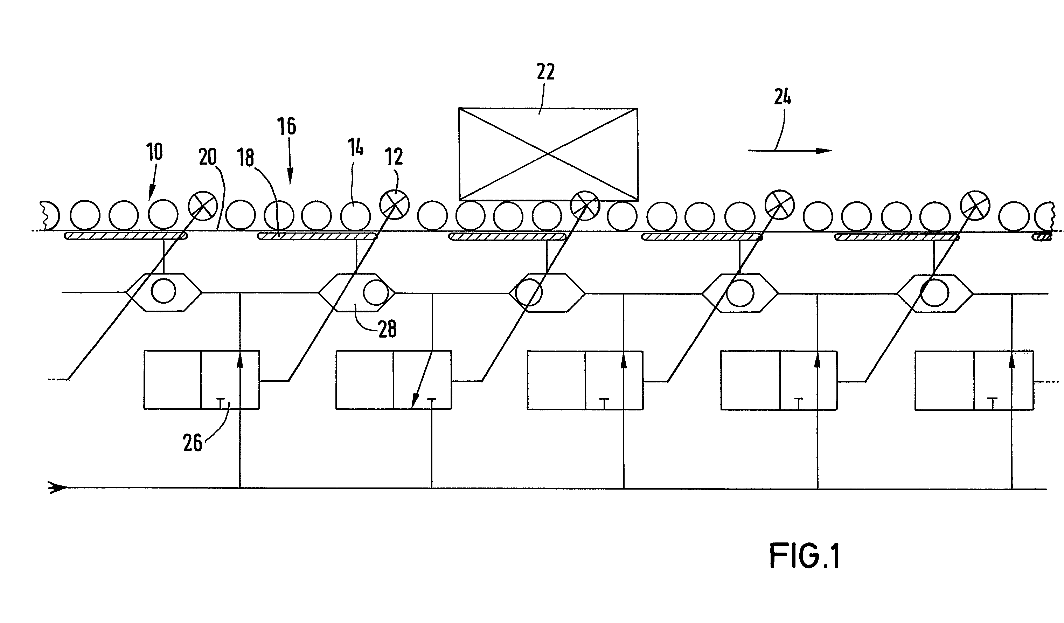

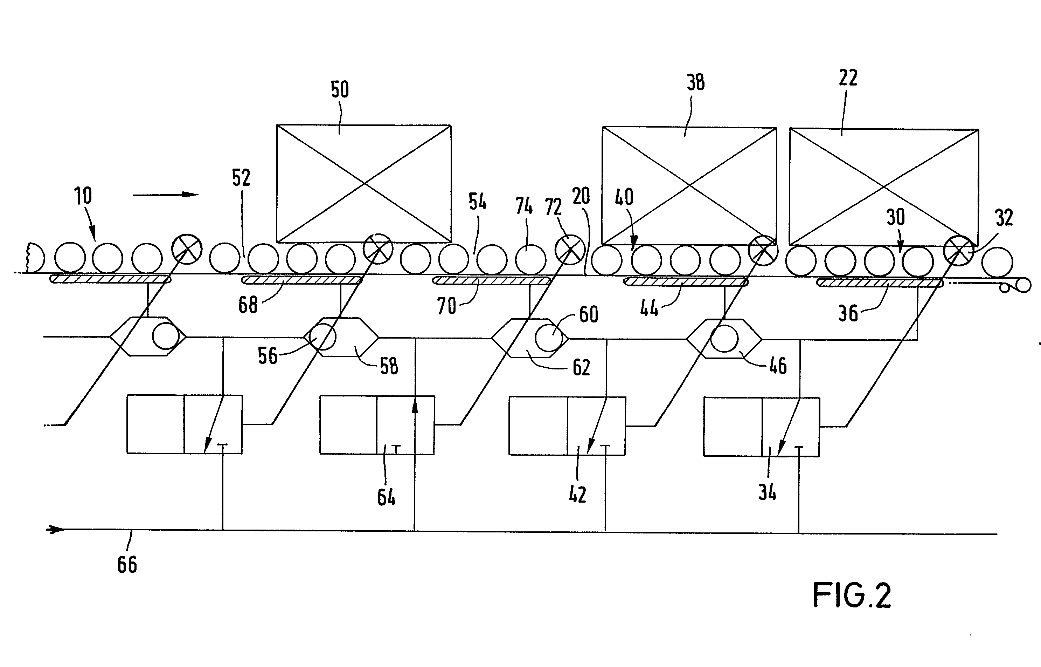

In Fig. 1 ist schematisch ein akkumulierender Förderer 10 gezeigt, bei welchem eine Rollenbahn in getrennte Förderabschnitte aufgeteilt ist. Jeder Förderabschnitt besteht aus einer Schaltrolle 12 mit dahinter angeordneten normalen tragenden Rollen 14, die in den Seitenträgern des Rahmens abgestützt sind. Jedem Förderabschnitt 16 ist eine Hebevorrichtung 18 zugeordnet, mit welcher ein Band 20 angehoben werden kann, wodurch die Rollen des Förderabschnitts 16 angetrieben werden, so daß ein Fördergut 22 in Richtung des Pfeiles 24 zum Anfang der Rollenbahn 10 transportiert wird. Die Steuerung der Förderabschnitte 16 erfolgt über Ventile 26 und 28. Wenn der am Bahnanfang befindliche Förderabschnitt 30 (siehe Fig. 2) nicht belegt ist, werden die nebeneinander angeordneten Förderabschnitte 16 nacheinander aktiviert, so daß das Fördergut 22 bis zum Anfang der Rollenbahn 10 transportiert wird. Sobald das Fördergut 22 den Förderabschnitt 30 erreicht und die Schaltrolle 32 überlaufen hat, erhält das Ventil 34 einen Steuerbefehl zum Inaktivieren der Hebevorrichtung 36, so daß in diesem Förderabschnitt 30 das Band 20 nicht mehr angetrieben wird. In Fig. 2 ist hinter dem Fördergut 22 ein Fördergut 38 dargestellt, das den zweiten Förderabschnitt 40 erreicht hat. Dieses Fördergut 38 verbleibt stillstehend auf der Rollenbahn, bis das Fördergut 22 von der Rollenbahn entnommen ist. In diesem Augenblick erfolgt eine Rückmeldung an das dem Förderabschnitt 40 zugehörige Ventil 42, wodurch die Hebevorrichtung 44 aktiviert und die Rollen des Förderabschnitts 40 und des Förderabschnitts 30 angetrieben werden, so daß das Fördergut 38 bis zum Bahnanfang geleitet werden kann. Die Rückmeldung erfolgt über ein ODER-Ventil 46, das zusammen mit dem Ventil 42 und einer Schnellentlüftung die dem Förderabschnitt 40 zugeordnete Ventileinheit darstellt.

Ein Fördergut 50 befindet sich in der Darstellung nach Fig. 2 zum Teil auf einem Förderabschnitt 52 und z.T. auf einem Förderabschnitt 54. Wie aus der Stellung von Ventilkugeln 56 in einem Ventil 58 und 60 in einem Ventil 62 zu ersehen ist, wird über das Ventil 64 aus der Druckluftleitung 66 Druckluft an die Hebevorrichtung 68 sowie die Hebevorrichtung 70 zugeführt, so daß die Rollen der Transportabschnitte 52 und 54 durch das über die Hebevorrichtung 68 und 70 angehobene Band angetrieben werden und das Fördergut 50 in Richtung der aufgestauten Güter 38 und 22 transportiert wird. Wenn das Gut 50 die Schaltrolle 72 des Förderabschnittes 54 erreicht, wird das Ventil 64 betätigt und es erfolgt eine Entlüftung der Hebevorrichtung 70, so daß diese Hebevorrichtung abgesenkt wird und das antreibende Band 20 von der Unterseite der Rollen des Förderabschnitts 54 entfernt wird. Während des Absenkens wird gleichzeitig die Rolle 74 neben der Schaltrolle 72 abgebremst, so daß das Fördergut 50 zum Stillstand kommt, ohne auf das Fördergut 38 aufzulaufen. Je nach der Schwere

- 7 -

der Fördergüter kann durch die Leitung 66 Druckluft mit einem Druck von etwa 2 bis etwa 6 Atü zugeführt werden, so daß das Band 20 mehr oder weniger stark an die Förderrollen angepreßt wird.

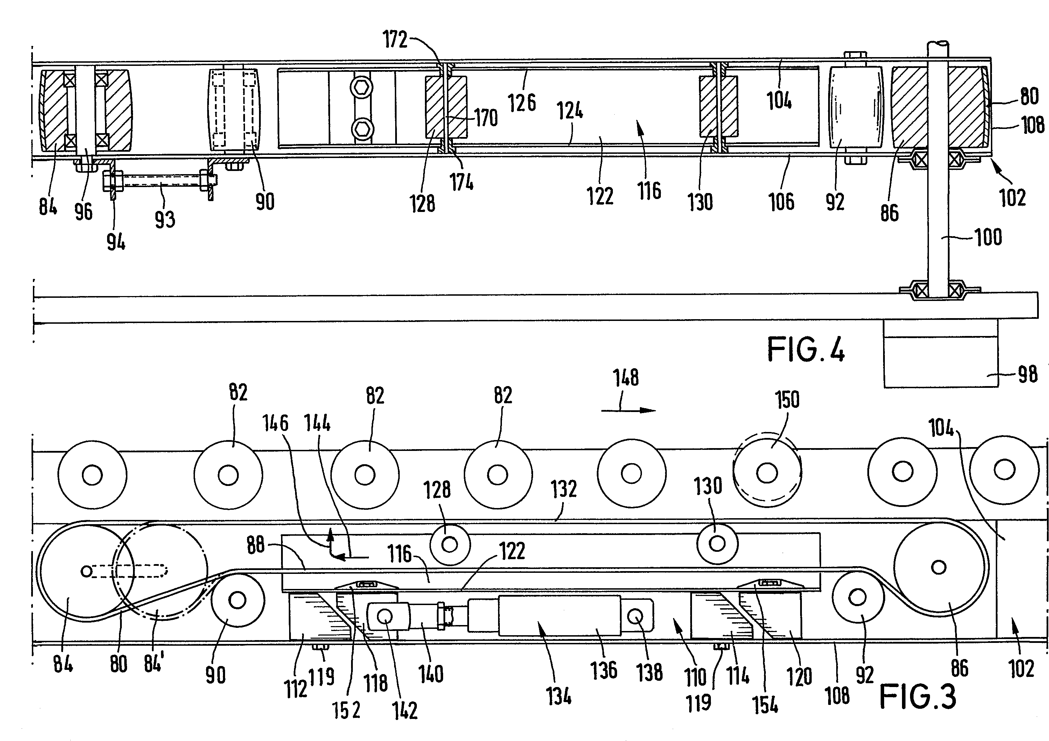

Fig. 3 zeigt in vereinfachter Darstellung eine Rollenbahn, wobei lediglich ein Förderabschnitt dargestellt ist. Ein Band 80 zum abschnittsweisen Antreiben von Förderrollen 82 ist an den Enden der Rollenbahn über Umlenkrollen 84 und 86 geführt. Zur Anhebung des Untertrums 88 des Bandes 80 sind neben den Umlenkrollen 84 und 86 untere Umlenkrollen 90 bzw. 92 vorgesehen. Zur Einstellung der Spannung des Bandes 80 ist die Umlenkrolle 34 verstellbar angeordnet, so daß sie aus einer vorderen Stellung 84' in die hintere Stellung verschoben werden kann. Die Verstellvorrichtung kann aus über Schrauben 92 verstellbare Lagerschilde 94 bestehen, in welchen die Achse 96 der Rolle 84 gelagert ist. Der Antrieb des Bandes 80 erfolgt über ein geeignetes Antriebsaggregat 98, das aus einem Motor mit geeignetem Getriebe bestehen kann, welches mit der Achse 100 der Rolle 86 verbunden ist.

Das Band 80 mit den Rollen 84 und 86 sowie den Umlenkrollen 90 und 92 ist in einem U-Profil 102 angeordnet, dessen Seitenschenkel 104 und 106 von der untenliegenden Basis 108 ausgehend nach oben gerichtet sind. Für jeden Förderabschnitt ist in dem U-Profil 102 eine Hebevorrichtung 110 vorgesehen. Jede Hebevorrichtung 110 besteht aus zwei Gleitrampen 112 und 114 und einem Profilabschnitt 116, der über Gleitstücke 118 und 120, die auf die Gleitrampen 112 und 114 aufgleiten können, anhebbar ist. Die Gleitrampen 112 und 114 sind über Schrauben 119 an der Basis 108 des U-Profils 102 befestigt. Die Gleitstücke 118 und 120 sind an der Basis 122 des vorzugsweise als U-Profil ausgebildeten Profilabschnittes 116 befestigt. Von der Basis 122 des Profilabschnittes 116 erstrecken sich zwei Schenkel 124 und 126 nach oben. Zwischen den Schenkeln 124 und 126 sind Rollen 128 und 130 angeordnet, auf denen das Obertrum 132 des Bandes 80 aufsitzt. Bei der gezeigten Ausführungsform sind jeder der Rollen 128 und 130 zwei Rollen 82 der Rollenbahn zugeordnet. Es wäre aber auch möglich, jeder Rolle 82 der Rollenbahn eine Rolle an dem Profilabschnitt 122 zuzuordnen, so daß dann zwischen den Rollen 128 und 130 mittig eine weitere Rolle vorgesehen wäre.

Unterhalb des Profilabschnittes 116 ist eine über Druckluft betriebene Kolben-Zylinder-Einheit 134 vorgesehen. Der Zylinder 136 ist über einen Zapfen 138 an dem U-Profil 102 angelenkt, während der Kolben 140 über einen Zapfen 142 an dem Gleitstück 118 angelenkt ist. Bei Aktivierung der Kolben-Zylinder-Einheit 134 wird der Kolben 140 aus dem Zylinder 136 verschoben, wobei die Gleitstücke 118 und 120 auf den Gleitrampen 112 und 114 auflaufen und den Profilabschnitt 116 um einen gewissen Betrag in Richtung des Pfeiles 144 verschieben und anschließend in Richtung des Pfeiles 146 anheben, so daß das Obertrum 132 des Bandes 80 an die Unterseiten der Rollen 82 gelangt. Dadurch werden die Rollen 82 angetrieben, so daß auf den Rollen vorhandenes Fördergut in Richtung des Pfeiles 148 transportiert wird. Für den in Fig. 3 gezeigten Förderabschnitt ist eine Rolle 150 als Schaltrolle ausgebildet. Diese Rolle 150 wird durch das auflaufende Fördergut heruntergedrückt, wobei ein Ventil betätigt wird und, wenn der Förderabschnitt am Anfang der Rollenbahn angeordnet ist, wird die Kolben-Zylinder-Einheit 134 entlüftet, wodurch die Hebevorrichtung 110 und damit das Obertrum 132 des Bandes 80 von den Rollen abgesenkt und der Antrieb der Rollen gestoppt wird.

Damit gewährleistet wird, daß das Profilstück 116 parallel zu der Basis 108 des U-Profils 102 angehoben wird, ist das Gleitstück 118 auf der Gleitrampe 112 und das Gleitstück 120 auf der Gleitrampe 114 zwangsgeführt. Im Inneren des Profilabschnittes 116 sind Profilabschnitte 152 und 154 zur Führung des Untertrums 88 des Bandes 80 vorgesehen, welches unterhalb der Rollen 128 und 130 durch den Profilabschnitt 116 geführt ist.

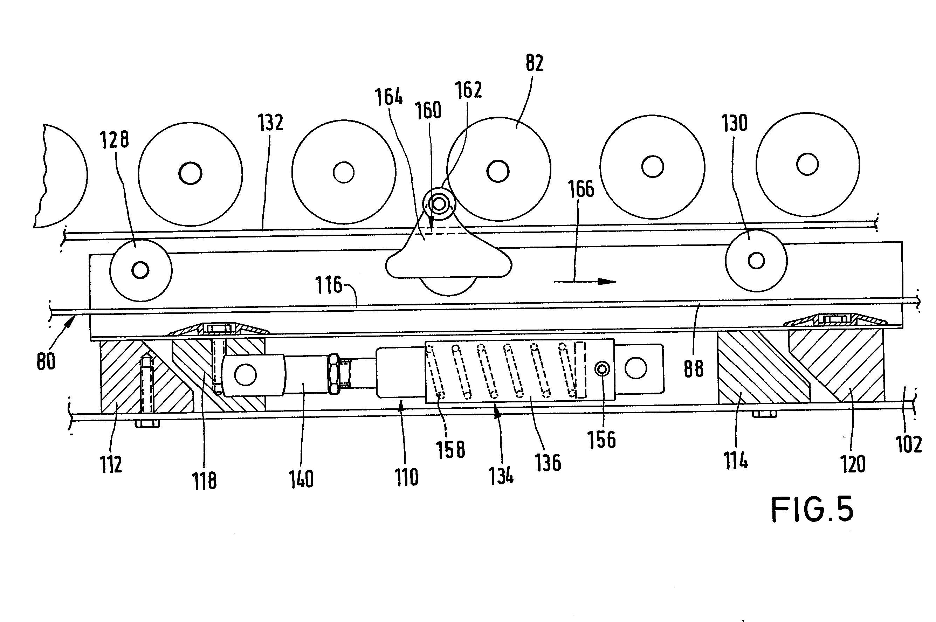

Wie aus Fig. 5 zu ersehen ist, erfolgt die Rückstellung des Kolbens 140 bei Abschalten der über einen Anschluß 156 zugeführten Druckluft über eine Feder 158, die innerhalb des Zylinders 136 angeordnet ist.

Die Seitenschenkel des Profilabschnittes 116 überragend ist oberhalb des Obertrums 132 des Bandes 80 eine Bremse 160 angeordnet, die aus einem Profil 162 besteht, dessen Oberfläche einen großen Reibungskoeffizienten aufweist. Das Profil 162 ist über Befestigungsschilder 164 an den Seitenschenkeln des Profilabschnittes 116 befestigt. Wenn der Kolben-Zylinder-Einheit 134 Druckluft zugeführt wird und dabei eine Verschiebung und ein Anheben des Profilabschnittes 116 erfolgt, wird die Bremse 160 von der Rolle 82 entfernt. Damit kann diese Rolle ebenfalls über das Obertrum 132 des Bandes 80 angetrieben werden. Wenn dagegen ein zu förderndes Gut die Schaltrolle des betreffenden Förderabschnittes betätigt hat, wird die Kolben-Zylinder-Einheit 134 entlüftet, wobei die Druckfeder 158 den Kolben in seine Ausgangsstellung zurückpreßt und der Profilabschnitt 116 durch Herabgleiten der Gleitstücke 118 und 120 von den Gleitrampen 112 und 114 abgesenkt und in Richtung des Pfeiles 166 verschoben wird. Dadurch gelangt das Profil 162 der Bremse 160 in Anlage an die Rolle 82, wodurch deren Drehbewegung und die Förderbewegung des auf der Rolle 82 aufsitzenden Fördergutes abgestoppt werden.

Die Achse 170 der Rolle 121 ist in Buchsen 172 und 174 gelagert. Diese Buchsen 172 und 174 stehen über die Seitenflächen der Schenkel 124 und 166 hinaus und bilden Führungen für den Profilabschnitt 116 in dem U-Profil 102. Die Lagerung der Rolle 130 ist wie die der Rolle 128 ausgeführt.

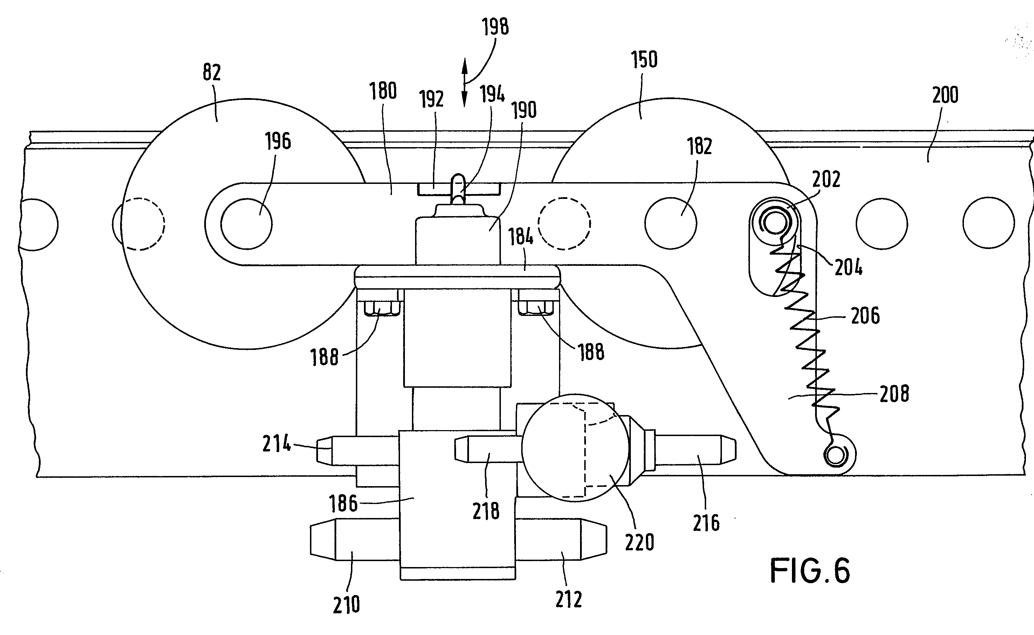

Aus Fig. 6 wird die Lagerung der Schaltrolle 150 ersichtlich. An der Achse der neben der Schaltrolle 150 gelagerten Rolle 84 ist ein etwa L-förmiger Hebel 180 mit einem Ende angelenkt. An diesen Hebel 180 ist bei 182 das eine Ende der Schaltrolle 150 gelagert, deren gegenüberliegendes Ende an dem Rahmen der Rollenbahn gelagert ist. Zwischen den Rollen 82 und 150 ist am Rahmen eine Befestigungsplatte 184 vorgesehen, an welcher ein Ventil 186 über Schrauben 188 befestigt ist. Ein Teil des Gehäuses 190, in welchem der Ventilschieber angeordnet ist, ist durch die Platte 184 geführt. An dem Hebel 180 ist eine Anschlagplatte 192 befestigt, gegen deren Unterseite das Ende eines aus dem Gehäuse 190 geführten Schieberzapfens 194 ansteht. Durch Verschwenken des Hebels 180 um das Lager 196 der Rolle 82 wird der Zapfen 194 in Richtung des Pfeiles 198 bewegt. Wenn ein zu förderndes Gut auf die Rolle 150 auffährt, wird diese nach unten gedrückt, wobei der Hebel 180 um das Lager 196 schwenkt. Dabei wird der Schieberzapfen 194 in das Ventil hineingedrückt und die entsprechenden Ventilbetätigungen erfolgen. Zur Begrenzung des Schwenkweges des Hebels 180 ist an dem Rahmen 200 der Rollenbahn ein Zapfen 202 befestigt, der durch ein Langloch 204 in dem Hebel ragt. Wenn die Schaltrolle 150 nach unten verschwenkt ist, sitzt die Oberseite des Langloches 204 auf dem Zapfen 202 auf. Die Rückstellbewegung des Ventils 186 wird unterstützt durch eine Zugfeder 206, die an dem Zapfen 202 und an dem Ende des Querschenkels 208 des Hebels 180 befestigt ist.

Das Ventil 186 weist Anschlußtüllen 210 und 212 für die Druckluftversorgungsleitung, 214 und 216 für die Rückmeldeleitung zu benachbarten Förderabschnitten, eine Anschlußtülle 218 für die Druckluftleitung zu der Kolben-Zylinder-Einheit 134 des zugehörigen Förderabschnittes sowie einen Schnellentlüfter 220 auf.

Das die Rollen antreibende Band 80 kann in seiner Treibrichtung umkehrbar sein, d.h. das Getriebe des Antriebsaggregates kann als Wendegetriebe oder der Motor als umkehrbarer Motor ausgebildet sein. Wenn jedem Förderabschnitt an den Enden je eine Schaltrolle zugeordnet ist, kann der akkumulierende Förderer in beiden Richtungen betrieben werden.

A n s p r ü c h e

1. Vorrichtung zur akkumulierenden Förderung von Gütern, mit einer Rollenbahn und mit einem abschnittsweise die zu fördernden Güter fortbewegenden Antrieb, wobei der Antrieb im Bereich der Rollenbahn angeordnet ist, wobei für den Antrieb ein an den Enden der Rollenbahn umgelenktes endloses, über ein Antriebsaggregat angetriebenes Band vorgesehen ist, wobei das Obertrum des Bandes in der Nicht-Förderstellung in nahem Abstand zu der Unterseite der Rollen angeordnet ist, wobei für jeden Förderabschnitt ein Profilabschnitt mit das Obertrum des Bandes tragenden Rollen vorgesehen ist, und wobei jeder Profilabschnitt mit einer unabhängigen Hebevorrichtung versehen ist, dadurch g e k e n n z e i c h n e t, daß für jede Hebevorrichtung (110) an dem Profil (102) Gleitrampen (112, 114) und an der Unterseite jedes Profilabschnitts (116) Gleitstücke (118, 120) zum Aufgleiten auf die Gleitrampen (112, 114) vorgesehen sind, und daß zum Verschieben jedes Profilabschnittes (116) eine Kolben-Zylinder-Einheit (134) angeordnet ist.

2. Vorrichtung nach Anspruch 1, dadurch g e k e n n - z e i c h n e t , daß das Profil (102) und die Profilabschnitte (116) U-Profile sind.

3. Vorrichtung nach Anspruch 2, dadurch g e k e n n - z e i c h n e t , daß die Kolben-Zylinder-Einheit eine pneumatische Einheit ist, daß der Kolben (140) durch Federkraft rückstellbar ist und daß der Zylinder (136) an dem U-Profil (102) und der Kolben (140) an dem Profilabschnitt (116) vorzugsweise an einem Gleitstück (118) angelenkt ist.

4. Vorrichtung nach einem der Ansprüche 1 bis 3, dadurch g e k e n n z e i c h n e t , daß bei Betätigung der Hebevorrichtung (110) eine Verschiebung in Bahnrichtung (144) und ein Anheben (146) des Profilabschnittes (116) erfolgt.

5. Vorrichtung nach einem der Ansprüche 1 bis 4, dadurch g e k e n n z e i c h n e t , daß jedes Gleitstück (118, 120) an der zugehörigen Gleitrampe (112, 114) zwangsgeführt ist.

6. Vorrichtung nach einem der Ansprüche 1 bis 5, dadurch g e k e n n z e i c h n e t , daß oberhalb des Obertrums (132) des Bandes (80) an dem Profilabschnitt (116) mindestens eine einer Rolle (82) der Rollenbahn zugeordnete Bremse (160) angeordnet ist.

7. Vorrichtung nach Anspruch 6, dadurch g e k e n n z e i c h n e t , daß die Bremse (160) aus einem Profil (162) mit einer Oberfläche hoher Reibung besteht, und daß das Profil (162) über zwei Befestigungsschilder (164) an dem Profilabschnitt (116) befestigt ist.

8. Vorrichtung nach einem der Ansprüche 1 bis 7, dadurch g e k e n n z e i c h n e t , daß im Inneren der Profilabschnitte (116) Gleitprofile (152, 154) für das Untertrum (88) des Bandes (80) angeordnet sind, daß die das Band (80) tragenden Rollen (128, 130) über Buchsen (172, 174) an den Profilabschnitten (116) gelagert sind, und daß die Außenseiten der Buchsen (172, 174) Führungsflächen zur Führung der Profilabschnitte (116) in dem U-Profil (102) bilden.

9. Vorrichtung nach einem der Ansprüche 1 bis 8, dadurch g e k e n n z e i c h n e t , daß die Gleitflächen der Gleitrampen (112, 114) und Gleitstücke (118, 120) unter einem Winkel von etwa 45° geneigt sind.

10. Vorrichtung nach einem der Ansprüche 1 bis dadurch g e k e n n z e i c h n e t , daß die Gleitrampen (112, 114), die Gleitstücke (118, 120) und die Gleitprofile (152, 154) aus Kunststoff, vorzugsweise aus Nylon, bestehen.

0198228

11. Vorrichtung nach einem der Ansprüche 1 bis 10, dadurch g e k e n n z e i c h n e t , daß jeder Rolle (82) der Rollenbahn eine Rolle (128, 130) für das Band (80) oder jeweils zwei benachbarten Rollen (82) der Rollenbahn eine Rolle (128, 130) für das Band (80) zugeordnet ist.

12. Vorrichtung nach einem der Ansprüche 1 bis 11, dadurch g e k e n n z e i c h n e t , daß eine Rolle jedes Förderabschnittes als Schaltrolle (150) ausgebildet ist.

13. Vorrichtung nach einem der Ansprüche 1 bis 12, dadurch g e k e n n z e i c h n e t , daß das Band reversierbar ist und daß jedem Förderabschnitt zwei Schaltrollen und zwei bremsbare Rollen zugeordnet sind.

FIG.1

0198228

FIG.2

FIG.4

FIG.3

-3/5-

FIG.5

FIG.6

C198228